# EUROPEAN PATENT APPLICATION

(11) **EP 2 474 347 A1**
(43) Date of publication of application: **11.07.2012**
(21) Application number: 09848944.6
(22) Date of filing: 22.10.2009
(51) Int. Cl.: A63H 33/22, G03B 21/00

(54) **SMALL PROJECTION TOY**

(30) Priority: 05.09.2009 JP 2009006355 U; 15.10.2009 JP 2009007340 U
(71) Applicant: Yugen Kaisha Rabbit, Okinawa 902-0067 (JP)
(72) Inventor: MAEDA, Takashi, Naha-shi Okinawa 902-0067 (JP); MAEDA, Nobukazu, Naha-shi Okinawa 900-0011 (JP); MIYAZATO, Arisa, Naha-shi Okinawa 900-0011 (JP)
(74) Representative: Andrews, Robert
(86) International application number: PCT/JP2009/005571
(87) International publication number: WO 2011/027413

(57) **Abstract**

Disclosed is a small projection toy, wherein the units of a small projector can be built easily and removably in a small article of various types in order to project an image film and enjoy the image, and the value is increased by making the small projection toy portable by being fixed to a key holder or the strap of a cellular phone. A small projection toy has a structure which permits a small projector consisting of a projection lens barrel and a battery unit to be stored in a small article of various types, and since an incorporated image film can be projected and watched, the value is increased. The small article consists of a lens barrel inserting portion into which the projection lens barrel is inserted and a battery storage portion in which the battery unit is stored, and since said portions can be separated and divided, the lens barrel can be attached and removed easily by dividing said portions. Since the battery storage portion can be divided into two in the battery storage room on the center line, the battery can be attached, removed, and replaced easily.

## Description

### BACKGROUND OF THE INVENTION

### Field of the Invention

The present invention relates to a portable small projection toy suitable for use by being attached to a key chain, a strap of a mobile phone, or the like.

### Description of the Background Art

In tourist areas, for example, photos of local specialties such as picturesque spots, craftworks, and the like are preferred, and if a small projector is incorporated in a casual toy that can be carried and enjoyed all the time so as to project an image to be watched, new demand is created and it would be preferred if it is attached to a key chain, a strap of mobile phone, or the like.
However, as a projection toy suitable for portability, only a structure in which a film disk is rotated so as to switch among pieces of projected image as described in Patent Document 1 is proposed.

Patent Document 1: Japanese Utility Model Registration No. 3029927

### (Problems to be Solved)

As described above, the projection toy described in Patent Document 1 has an advantage that a plurality of images can be selected and enjoyed; however, the toy cannot be incorporated in a model or a toy such as a local specialty of a tourist area also capable of serving as a small article such as a model or a toy. Therefore, the toy should be enjoyed only as a portable projection toy and no joy as local specialties or toys unique to the tourist area can be obtained, and as a result, its commodity value is low.
As described above, in order to improve an added value by incorporating a small projector in a small article having a shape of various models and animals, it is necessary to realize an incorporated-type small projection toy to which a unit of a small projector can be easily attached so that it can be handled casually.
An attention was paid to such a problem, and a technical object of the present invention is to improve an added value by easily and detachably incorporating a unit of a small projector in a small article having a shape of various models and animals so that the unit can be attached to a key chain, a strap of a mobile phone, or the like to be carried.

### SUMMARY OF THE INVENTION

### (Means for Solving Problems)

The technical problems of the present invention are solved by the following means.
A first aspect of the present invention is a small projection toy of an incorporation-in-small-article type configured such that: a small projector including a projection lens barrel and a battery unit can be housed in a small article such as various local specialties, models of animals and vehicles, toys; and an incorporated image film can be watched by projection.
According to the above, the structure capable of housing the small projector including the projection lens barrel and the battery unit in the small article of various types is provided so that the incorporated image film can be projected onto paper, a wall surface, and the like to be watched, and therefore, the toy can also be enjoyed as the various types of local specialties, models of animals and vehicles, toys, and the like, whereby an added value is improved. The structure of insertion or taking-out of this small projector is not particularly limited, and switch means of a battery power supply is optional.

A second aspect of the present invention is a small projection toy of an incorporation-in-small-article type of the above first aspect, wherein the small article includes the lens barrel insertion portion into which the projection lens barrel is inserted and a battery housing portion that houses the battery unit, and wherein the lens barrel insertion portion and the battery housing portion are separable from and dividable into each other, and the battery housing portion is dividable into two parts with respect to a battery housing chamber on a center line.
According to the above, the small article imitating the shape of an animal, a local specialty, or the like includes the lens barrel insertion portion into which the projection lens barrel is inserted and the battery housing portion that houses the battery unit, and such two portions can be separated from each other and divided into each other, and therefore, such two portions can be easily divided into each other and the lens barrel can be detached or attached. Also, the battery housing portion can be divided into two parts in the battery housing chamber on the center line, and therefore, a battery can be detached, attached, or replaced with ease.

A third aspect of the present invention is a small projection toy of an incorporation-in-small-article type of the above first or second aspect, wherein the above battery unit has an operable contact for an on/off switch of a power supply on a side surface thereof, and the small projection toy has mounted thereon a push button for operating the operable contact so that the push button is operable from an outside.
According to the above, the battery unit has the operable contact for the on/off switch of the power supply on a side face thereof, and the push button for operating the operable contact is housed in such a manner that the push button is operable from an outside, an therefore, an on/off operation of the battery for projection is easy.

A fourth aspect of the present invention is a small projection toy of an incorporation-in-small-article type of the above third aspect, wherein a lens barrel insertion hole has a perfect circle shape, and a housing portion that houses the operable contact in the battery housing chamber has a flat shape in a direction orthogonal to a direction for operating the push button.
According to the above, the lens barrel insertion hole has a perfect circle shape, while the housing portion that houses the operable contact in the battery housing chamber has a flat shape in a direction orthogonal to a direction for operating the push button, and therefore, there is no concern that the on/off operation of the power supply is obstructed by rotation of a battery case, which rotation would cause the operable contact of the power supply to be displaced, resulting in defective contact or the like.

A fifth aspect of the present invention is a small projection toy of an incorporation-in-small-article type of the above third or fourth aspect, wherein a flange portion for preventing disengagement of the push button is disposed on a dividing surface so as to be located close to the battery housing chamber, and is mounted in such a manner that the push button is operable from an outside.
According to the above, the flange portion for preventing disengagement of the push button is disposed on a dividing surface so as to be located close to the battery housing chamber, and therefore, assembling through insertion from the same direction as that of the battery is possible in the divided state so that the push button is operable from an outside.

A sixth aspect of the present invention is a small projection toy of an incorporation-in-small-article type of any one of the first to fifth aspects, wherein the projection lens barrel is provided with a projection lens close to an outer end thereof, and is configured such that an image film can be inserted thereinto and attached thereto from an inner end thereof.
According to the above, the projection lens is close to the outer end of the projection lens barrel, and the image film can be inserted and attached from the inner end, and therefore, the image film can be easily attached or replaced only by dividing and separating the lens barrel insertion portion.

A seventh aspect of the present invention is a small projection toy of an incorporation-in-small-article type of any one of the first to sixth aspects, wherein the projection lens barrel is detachable from/attachable to a lens barrel insertion hole at a dividing surface side.
According to the above, the projection lens barrel is detachable from and attachable to the lens barrel insertion hole at a dividing surface side, and therefore, there is no concern that the projection lens barrel is removed, dropped, or lost when being used, carried, or moved.

An eighth aspect of the present invention is a small projection toy of an incorporation-in-small-article type of any one of the first to seventh aspects, wherein the projection toy houses speaker means for emitting sound such as voice of greetings, voice of commercial messages, call of animals.
According to the above, the speaker means for emitting sound such as voice of greetings, voice of commercial messages, call of animals is housed, and therefore, by emitting sound such as roars of a lion, calls of a dog or a cat, singing of birds, and the like from the speaker, for example, a use value is further improved, and a reality feeling is increased. By emitting sound such as voice of greetings of a shop staff, voice of commercial messages, sales of various goods can be promoted. Memorizing of short English sentences or practices of English words can also be performed.
By means of electric connection, it is also possible to emit sound at the same time as projection or to make a speaker operation independent of a projection operation.

### (Advantageous Effects of the Invention)

As described in the above first aspect of the present invention, the small projector can be housed in the small article of various types so that the incorporated image film can be watched by projection, and the small projection toy can also be enjoyed as the various types of local specialties, models of animals and vehicles, toys, and the like, whereby an added value is improved.

As described in the above second aspect of the present invention, the small article includes the lens barrel insertion portion and the battery housing portion, and such two portions can be separated from each other and divided into each other, and therefore, such two portions can be divided into each other and the lens barrel can be detached or attached with ease. Also, the battery housing portion can be divided into two parts in the battery housing chamber on the center line, and therefore, the battery can be detached, attached, or replaced with ease.

As described in the above third aspect of the present invention, the battery unit has the operable contact for the on/off switch of the power supply on a side face thereof, and the push button for operating the operable contact is attached to the small projection toy so as to be operable from an outside, and therefore, the on/off operation of the battery for projection is easy.

As described in the fourth aspect of the present invention, the lens barrel insertion hole has a perfect circle shape, while the housing portion that houses the operable contact in the battery housing chamber has a flat shape in a direction orthogonal to a direction for operating the push button, and therefore, there is no concern that the on/off operation of the power supply is obstructed by defective contact caused by rotation of the battery case and displacement of the operable contact of the power supply."

As described in the above fifth aspect of the present invention, the flange portion for preventing disengagement of the push button is disposed on the dividing surface so as to be located close to the battery housing chamber, and therefore, assembling through insertion from the same direction as that of the battery is possible in the state divided into two parts so that the push button is operable from an outside.

As described in the above sixth aspect of the present invention, the projection lens is close to the outer end of the projection lens barrel, and the image film can be inserted and attached at the inner end, and therefore, the image film can be easily attached or replaced only by dividing and separating the lens barrel insertion portion.

As described in the above seventh aspect of the present invention, the projection lens barrel is detachable from and attachable to the lens barrel insertion hole at the dividing surface side, and therefore, there is no concern that the projection lens barrel is removed, dropped, or lost when being used, carried, or moved.

As described in the above eighth aspect of the present invention, the speaker means for emitting sound such as voice of greetings, voice of commercial messages, call of animals is housed, and therefore, by emitting sound such as roars of a lion, calls of a dog or a cat, singing of birds, and the like from the speaker, for example, a use value is further improved, and a reality feeling is increased. By emitting sound such as voice of greetings of a shop staff, voice of commercial messages, sales of various goods can be promoted. Memorizing of short English sentences or practices of English words can also be performed.

### BRIEF DESCRIPTION OF THE DRAWINGS

Fig. 1 is an external perspective view of a small projector of an incorporation-in-small-article type according to the present invention.
Fig. 2 is a bottom view of a lion-shaped small article in Fig. 1.
Fig. 3 is a perspective view of a main body portion in a state where a main-body front face portion for insertion of a lens barrel of the lion-shaped small article is separated from the main body portion.
Fig. 4 is a view illustrating the lion-shaped small article, in a disassembled state, having the small projector incorporated therein.
Fig. 5 is a front view of a battery unit, lens barrel, and main-body right half portion in a lateral direction of a main body portion in a state where the battery unit and the lens barrel are housed in a housing chamber of the main-body right half portion.
Fig. 6 is a cross-sectional view of a projection lens barrel and the battery unit constituting the small projector.
Fig. 7 is a perspective view of an inside of the main-body right half portion having a speaker for emitting sound incorporated therein.

### DESCRIPTION OF EMBODIMENTS OF THE INVENTION

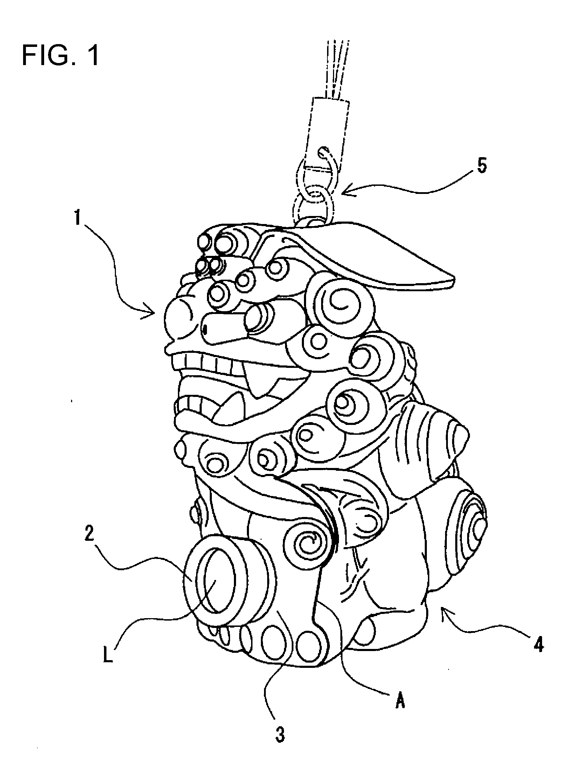

A small projection toy of an incorporation-in-small-article type as an embodiment of the present invention will be described by using an illustrated embodiment of a lion ("Shiisa", a lion-shaped roof ornament of Okinawa). Fig. 1 is an external perspective view of the small projection toy of an incorporation-in-small-article type as a whole as an embodiment of the present invention. Reference numeral 1 denotes a small article in a shape of lion ("Shiisa") having a projection lens barrel distal end 2 exposed on the lower part on the front thereof in a seated state, and having a projection lens L visually provided thereon. With respect to the lion-shaped small article 1 molded of a synthetic resin, a front face portion 3 and a main body portion 4 can be separated from each other and divided into each other at a position of a front-part dividing surface A, and a projection lens barrel is inserted into the front face portion 3 from the inner side thereof in the divided state.
At the top end of the main body portion 4, suspending means 5 such as a chain can be engaged.

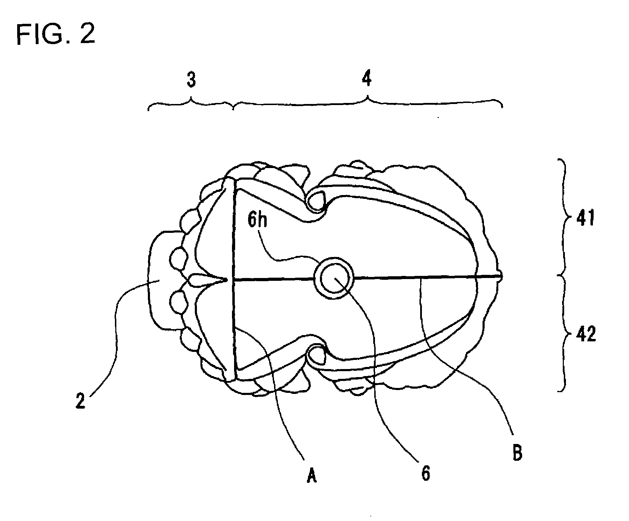

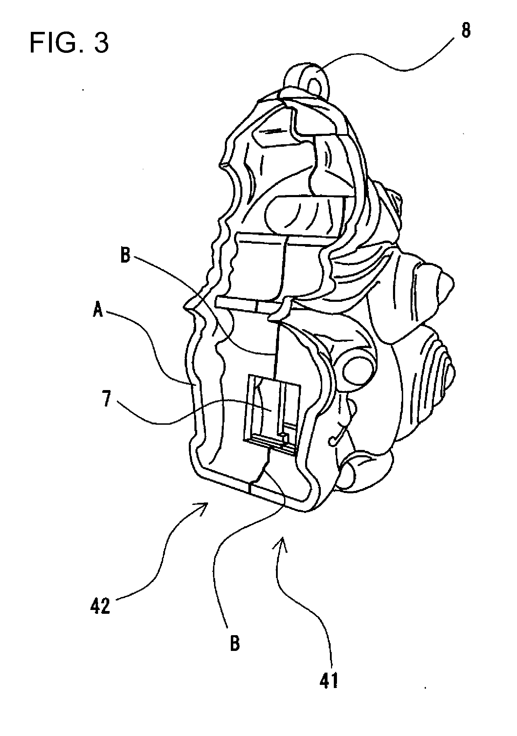

Fig. 2 is a bottom view of the lion-shaped small article 1 in Fig. 1. The main body portion 4 can be divided from the front face portion 3 having the lens barrel inserted thereinto on the front-part dividing surface A. The main body portion 4 can be divided into a left half portion 41 and a right half portion 42 arranged in a lateral direction on a right-and-left dividing surface B set at a back-bone position, that is, on the center line in a longitudinal direction, and on this right-and-left dividing surface B, a push button 6 is mounted on the bottom portion.
If the lens barrel inserted front face portion 3 in Fig. 1 is separated from the lion-shaped small article 1 at the position of the front-part dividing surface A, as illustrated in Fig. 3, the front-part dividing surface A of the main body portion 4 is exposed, and on the vertically-divided right-and-left dividing surface B, the main body portion 4 is divided into two parts, which are the left half portion 41 and the right half portion 42 in a lateral direction.
On the right-and-left dividing surface B, a housing chamber 7, which houses a rear part of the projection lens barrel and a battery unit, are seen as having a square shape. At the top ends of the left half portion 41 or the right half portion 42 of the main body portion 4, a mounting portion 8 of the suspending means 5 is provided in an annular shape.

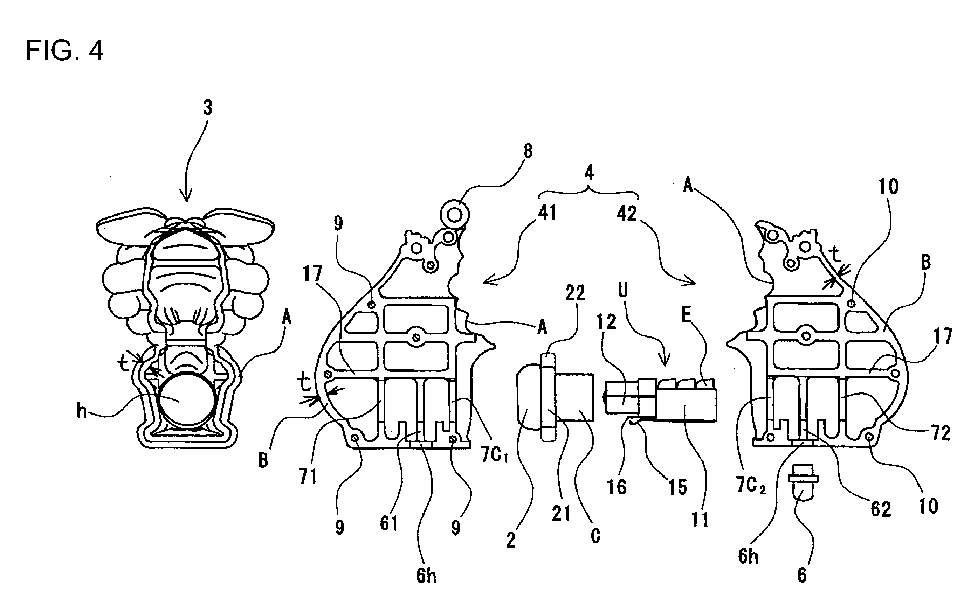

As illustrated in Fig. 4 of an exploded state, the front face portion 3, the main-body left half portion 41, and the main-body right half portion 42, which are obtained by division on the front-part dividing surface A and the right-and-left dividing surface B, are viewed from an inside, respectively.
Since an animal such as a lion has a symmetric shape in a lateral direction, the small article 1 is divided into right and left two parts in a lateral direction on a linear surface at the center position B, which linear surface is linear in a longitudinal direction, but since the animal does not have a symmetric shape in a longitudinal direction, the small article 1 is divided into the front face portion 3 and the main body portion 4 at the position A along the shape of the front part of the lion.
Thus, the right-and-left dividing surfaces B of the main-body left half portion 41 and the main-body right half portion 42 are on the same plane, and the surface of one thereof (the main-body left half portion 41 in the illustrated example) has a plurality of columnar projections 9, and the surface of the other thereof (the main-body right half portion 42) has recessed holes 10 formed such that the projections 9 can be fitted thereinto. As a result, by allowing the right-and-left dividing surfaces B of the main-body left half portion 41 and the main-body right half portion 42 to abut together, the projections 9 are fitted into the recessed holes 10, thereby holding temporarily the main-body left half portion 41 and the main-body right half portion 42 to be united.

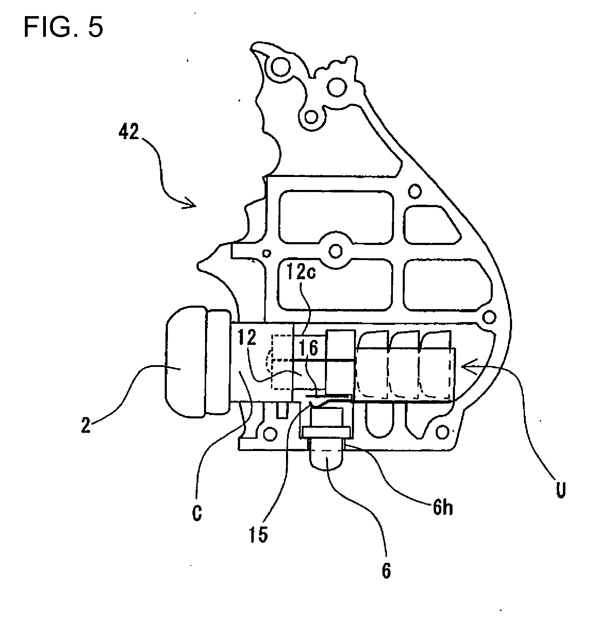

In a state where the main body potion 4 is divided and opened on the right-and-left dividing surfaces B, the rear part of a lens barrel C inserted into a lens barrel insertion hole 3h of the main-body front face portion 3 and battery unit U are inserted into the housing chamber of one of the main-body right and left half portions 41, 42 (the main-body right half portion 42, for example); and thereafter the other of the main-body right and left half portions 41, 42 (the main-body left half portion 41, for example) is united with the one of the main-body right and left half portions 41, 42 so as to be integrated as illustrated in Fig.5; and thereafter the main-body front face portion 3 is united with the integrated one and other so as to be integrated on the front-part dividing surface A, and therefore, the projection lens barrel distal end 2 can be inserted into the lens barrel insertion hole 3h so as to be exposed on the front face as illustrated in Fig. 1.
The battery unit U includes a switch for turning on/off a light emitting portion in a projection barrel 12 provided on the front end of a battery case 11 that houses a button battery E, and the lens barrel C includes the projection lens L at the distal end thereof, into which a film for projection has been inserted in advance from the rear end.

As illustrated in Fig. 5 of a state before the main body portion 4 is united on the right-and-left dividing surface B, the battery unit U is housed in a battery-unit housing chamber 72 of the main-body right half portion 42 as illustrated in Fig. 4, and the push button 6 is inserted into a button housing chamber 62 and a button hole 6h, and a contact portion of an open contact plate 15 of the switch to be pressed by the inner end of the push button 6 is usually separated from a fixed contact 16.
The battery housing chamber 7 formed by uniting the right and left battery-unit housing chambers 71 and 72 has a square shape as illustrated in Fig. 3, and the bottom face thereof is flat. The bottom face of the battery chamber 7 therefore becomes parallel with the flat bottom face of the battery case 11 and the open contact plate 15, whereby free rotation of the battery unit U is prevented.
In a state where the projection barrel 12 is fitted into and connected with the inner end of the projection lens barrel C, the projection lens barrel C is inserted into the lens barrel housing chamber 7C2 of the main-body right half portion 42 as illustrated in Fig. 4, and thereafter the projection lens barrel C is united with the other main-body left half portion 41 so that the projections 9 are fitted into the recessed holes 10, and as a result, the main body portion 4 side is completed.

The distal end 2 of the projection lens barrel C is inserted into the lens barrel insertion hole 3h of the main-body front face portion 3 and also, the front-part dividing surface A of the main body portion 4 and the front-face dividing surface A of the main-body front face portion 3 are caused to abut each other and are united together so that the lion-shaped small article 1 having a small projector incorporated therein as illustrated in Figs. 1 and 2 is completed.
In the illustrated example, a small-diameter barrel portion 21 is present inside a large-diameter distal end 2 of the projection lens barrel C, and therefore, in a state where the projection lens barrel C constituting the small projector and the battery unit U are connected to each other, the large-diameter distal end 2 can be pinched with fingers and pulled out of the lion-shaped small article 1. By incorporating a compression coil spring in the back part of the battery case 11, the small projector is pushed out by a spring force, and by pushing in the small projector against the spring force and rotating the small projector by a predetermined angle, the small projector can be locked by the principle of a bayonet mechanism. By rotating the small projector in the opposite direction by a predetermined angle, the small projector is unlocked and pushed out by the spring force. The structure of a power switch is arbitrary: the structure to be switched on by rotation of the large-diameter distal end 2 to the right and to be switched off by rotation to the left is possible, for example.
On the other hand, by forming a large-diameter barrel portion 22 having a diameter larger than the distal end 2 instead of the small-diameter barrel portion 21, a stopper function of preventing the large-diameter barrel portion 22 indicated by a dotted line from being removed from the lens barrel insertion hole 3h can be provided so as to have a structure of preventing removal of the projection lens barrel C from the insertion hole 3h.

The front-part dividing surface A between the main body portion 4 and the main-body front face portion 3 may have a structure similar to the right-and-left dividing surface B on which the projections 9 are fitted into the recessed holes 10 or a structure of hooking by a hook claw or a structure of screwing may also be adopted. It is to be noted that bonding may also be adopted, but such bonding makes disassembling operation difficult.
The right-and-left dividing surfaces B may also be hooked by a hook claw, screwed, or bonded instead of fitting the projections 9 into the recessed holes 10.
The main body potion 4 and the main-body front face portion 3 are both molded into hollow structures in which only an outer shell potion having a thickness "t" remains, and the main-body left half portion 41 and the main-body right half portion 42 of the main body potion 4 are also molded into hollow structures such that only the outer shell potion having the thickness "t" remains other than a ridge potion 17, but with the ridge potion 17 being plane so that the right-and-left dividing surfaces B become coplanar with each other.
The battery-unit housing chambers 71 and 72 and the lens barrel housing chambers 7C1 and 7C2 are formed with shallow ribbed portions so that a square space is formed in a state where the main-body right and left half portions 41 and 42 are united together.

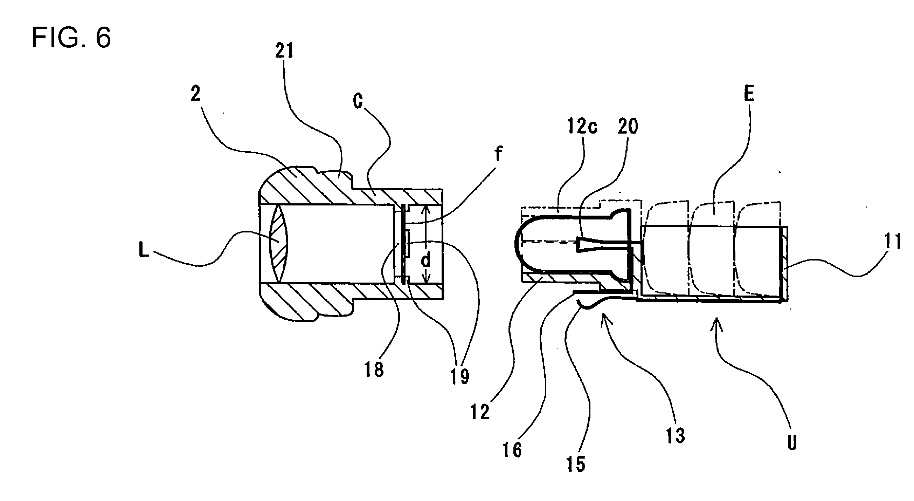

As illustrated in Fig. 6, the projection lens barrel C incorporates the projection lens L inside the front end thereof, and an image film f is attached to the inner end face of an inward flange portion 18 integrally molded on the inner end side. By setting the outer diameter of the image film f at slightly larger than an inner diameter "d" of the projection lens barrel C, the image film f is held in the projection lens barrel C by its own elastic force, and there is no concern that the image film f is easily removed from an inside of the projection lens barrel C.
However, as illustrated, by forming projections 19 for preventing removal of the image film f on the inner periphery of the projection lens barrel C with an interval of 120 degrees, for example, and by inserting the image film f between the ring-shaped flange portion 18 and the projections 19, removal can be prevented more reliably.

With respect to the battery unit U, since a switch 13 is configured such that a fixed contact 16 provided on the lower part of the projection barrel 12 surrounding a light emitting body 20 on the front end of the battery case 11 of a battery E and a contact on the open contact plate 15 on the side of the battery case 11 can face each other having an interval therebetween, if the push button 6 as illustrated in Fig. 5 is pressed from an outside, the open contact plate 15 is pressed onto the fixed contact 16, and the light emitting body 20 is energized and lighted.
The projection barrel 12 is inserted into the projection lens barrel C. Therefore, if the light emitting body is lighted and the image film f is illuminated, the image is enlarged by the projection lens L and the projection surface is irradiated with the enlarged image, whereby the projected image can be enjoyed.
Since the projected image is as small as approximately 1 to 5 cm in usual cases, the image can be easily projected on a palm or paper at hand, back sides of wrapping paper, name card, and the like, and can be enjoyed.

The illustrated projection barrel 12 is configured such that: the projection barrel 12 is open on the upper half; and the light emitting body 20 is incorporated therein, and thereafter an upper-half cap body 12c is capped, and thereafter the barrel is inserted into the projection lens barrel C, but it may be an integral structure in the first place.
Also, it is preferable that the image film f can be pushed out of the lens L side by inserting an elongated rod such as a toothpick or a pin, for example, through a small hole opened in the side wall of the projection lens barrel C so that the image film f can be easily taken out.
As described above, since the image film f can be easily taken out, it is possible to prepare several films f with different images in advance so that such films f can be freely replaced and projected for enjoyment. Therefore, image films about scenic sites, scenes of historic interests, local specialties, and the like of tourist areas can be purchased to be casually projected and enjoyed.

Therefore, as the small article for housing the small projector, as an embodiment according to the present invention, formed of the projection lens barrel C and the battery unit U, various small articles sold at tourist areas are preferable, and models of various animals, fruits and vehicles, dolls, stuffed animals, various toys, and the like can be considered without any particular limitation. Therefore, material for the small article is not limited to synthetic resins, either, but the various materials such as ceramics, glass, wood, cloth, and the like can be used.
As described above, it is only necessary that the projection lens barrel C and the battery unit U are housed in a small article of various types, and the switch 13 is provided for turning on/off the power supply by pressing the contact portion of the open contact plate 15 onto the fixed contact 16 on the battery unit U by using the push button 6.
However, instead of such a special power switch, it may be configured such that the power is turned on only by pressing the projection lens barrel from an outside so as to bring contacts into contact with each other, and is turned off by pressing the barrel again.

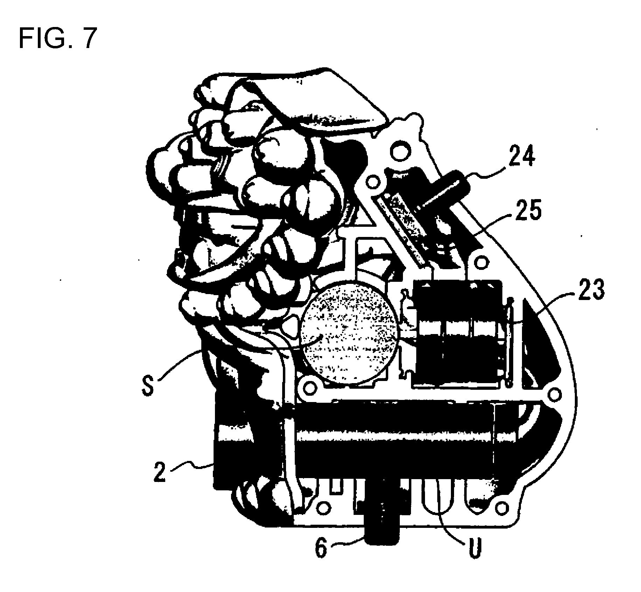

As illustrated in Fig. 7, by incorporating a speaker S, a battery 23 for driving the same, a switch 25 for power-on/off, and a push button 24 for switch manipulation, various types of sound can be emitted.
For example, by emitting roars of a lion, singing of birds such as Okinawa rail, meows and barks and the like from the speaker S, the use value is further improved, and a reality feeling can be increased. Muffler sound of a vehicle, an alarm of a railway crossing, and the like may also be remitted.
Emission of sound such as voice of greetings and commercial messages can promote sales of various goods.

In the figures, electric connections are not shown, but it is needless to say that the battery 23, the speaker S, and the switch 25 are connected to each other, and the on/off operation of the switch 25 is performed by the push button 24. Also, it may be configured such that the speaker S can emit various sounds by using a medium in which various sounds as described above are recorded, and in this case, memorizing of short English sentences and practice of English words are also possible.
An oscillation circuit which emits sound resembling various sounds can be incorporated so that the sounds can be emitted from the speaker S.
The battery 23 may be omitted and the battery E for projection can be used for the both purposes, or the switch 25 and the push button 24 may be omitted and electric connection may be configured such that the switch 13 manipulated by the push button 6 can be used for the both purposes. In this case, sound is emitted at projection, but if the switch 25 and the push button 24 are provided independently as illustrated in Fig. 7, the projection operation and the speaker operation are made independent of each other.

### (Industrial Applicability)

As described above, the present invention can be made portable by incorporating a small projector in a small article such as a model of a local souvenir or an animal so that an image is projected on a nearby wall surface or paper in a casual manner and enjoyed, and thus, it is suitable for sales in tourist areas by being attached to a strap or a key chain or also suitable as a projection toy.

(Reference Numerals)
- 1: "Shiisa"-shaped small article
- 2: projection lens barrel distal end
- L: projection lens
- 3: front face portion of lion-shaped small article
- 3h: lens barrel insertion hole
- A: front-part dividing surface
- B: right-and-left dividing surface
- 4: main body portion
- 41: left half portion
- 42: right half portion
- 6: push button
- 62: button housing chamber
- 6h: button hole
- 7: battery housing chamber
- 71, 72: battery housing chamber
- 7C1, 7C2: lens barrel housing chamber
- 9: columnar projection
- 10: recessed hole
- C: lens barrel
- U: battery unit
- 11: battery case
- 12: projection barrel
- 13: switch
- 15: open contact plate
- 16: fixed contact
- 17: ridge portion
- 18: inward flange portion
- f: image film
- 20: light emitting body
- S: speaker
- 23: battery
- 24: push button
- 25: on/off switch

## Claims

1. A small projection toy of an incorporation-in-small-article type, the small projection toy configured such that: a small projector including a projection lens barrel and a battery unit can be housed in a small article such as various local specialties, models of animals and vehicles, toys; and an incorporated image film can be watched by projection.

2. A small projection toy of an incorporation-in-small-article type according to claim 1, wherein the small article includes a lens barrel insertion portion into which the projection lens barrel is inserted and a battery housing portion that houses the battery unit, and wherein
the lens barrel insertion portion and the battery housing portion are separable from and dividable into each other, and the battery housing portion is dividable into two parts with respect to a battery housing chamber on a center line.

3. A small projection toy of an incorporation-in-small-article type according to claim 1 or 2, wherein the battery unit has an operable contact for an on/off switch of a power supply mounted on a side surface thereof, and the small projection toy has mounted thereon a push button for operating the operable contact so that the push button is operable from an outside.

4. A small projection toy of an incorporation-in-small-article type according to claim 2 or 3, wherein a lens barrel insertion hole has a perfect circle shape, and a housing portion that houses the operable contact in the battery housing chamber has a flat shape in a direction orthogonal to a direction for operating the push button.

5. A small projection toy of an incorporation-in-small-article type according to claim 2, 3, or 4, wherein a flange portion for preventing disengagement of the push button is disposed on a dividing surface so as to be located close to the battery housing chamber, and is mounted in such a manner that the push button is operable from an outside.

6. A small projection toy of an incorporation-in-small-article type according to any one of claims 1 to 5, wherein the projection lens barrel is provided with a projection lens close to an outer end thereof, and is configured such that an image film can be inserted thereinto and attached thereto from an inner end thereof.

7. A small projection toy of an incorporation-in-small-article type according to any one of claims 1 to 6, wherein the projection lens barrel is detachable from/attachable to a lens barrel insertion hole at a dividing-surface side.

8. A small projection toy of an incorporation-in-small-article type according to any one of claims 1 to 7, wherein the projection toy houses speaker means for emitting sound such as voice of greetings, voice of commercial messages, call of animals.
